# EUROPÄISCHE PATENTSCHRIFT

(11) **EP 1 098 789 B1**
(45) Veröffentlichungstag und Bekanntmachung des Hinweises auf die Patenterteilung: **10.12.2003**
(21) Anmeldenummer: 00938533.7
(22) Anmeldetag: 10.05.2000
(51) Int. Cl.: B60R 21/01

(54) **ANSTEUERSCHALTUNG FÜR EINEN WECHSELSTROM-ZÜNDKREIS EINES RÜCKHALTEMITTELS**
CONTROL CIRCUIT FOR AN ALTERNATING-CURRENT IGNITION CIRCUIT OF A RESTRAINING MEANS
CIRCUIT DE COMMANDE POUR CIRCUIT D'ALLUMAGE A COURANT ALTERNATIF POUR MOYENS DE RETENUE

(30) Priorität: 18.05.1999 DE 19922710
(43) Veröffentlichungstag der Anmeldung: 16.05.2001
(73) Patentinhaber: ROBERT BOSCH GMBH, 70442 Stuttgart (DE)
(72) Erfinder: MATTES, Bernhard, D-74343 Sachsenheim (DE); SCHUMACHER, Hartmut, D-71691 Freiberg (DE); RINGGER, Klaus, D-72622 Nuertingen (DE)
(86) Internationale Anmeldenummer: DE0001462
(87) Internationale Veröffentlichungsnummer: WO00069689

(56) Entgegenhaltungen:
- DE-A- 4 447 174
- DE-A- 19 802 042
- DE-A- 19 822 263

## Beschreibung

### Stand der Technik

Die vorliegende Erfindung betrifft eine Ansteuerschaltung für einen Wechselstrom-Zündkreis, der mindestens eine Kapazität und mindestens ein Zündelement, das zur Auslösung eines Rückhaltemittels in einem Fahrzeug dient, enthält, wobei eine Brückenschaltung mit vier elektronisch steuerbaren Schaltern vorgesehen ist, von denen jeweils zwei Schalter zwischen einer Versorgungsspannung und Masse in Reihe geschaltet sind und der Zündkreis einen Brückenquerzweig zwischen den beiden parallel geschalteten Schalterpaaren bildet, wobei bei einem in der Brückenschaltung auftretenden Fehler eine Ansteuerung nur derjenigen Schalter erfolgt, die trotz des Fehlers ein Aufladen und Entladen der Kapazität gewährleisten.

Eine derartige Ansteuerschaltung ist aus der DE 44 47 174 A1 bekannt. Bei einem sicherheitsrelevanten System wie Rückhaltemitteln (z.B. Airbags, Gurtstraffer) in einem Fahrzeug sollte die Aktivierung von Zündkreisen in jedem Fall sichergestellt werden, selbst wenn die Ansteuerschaltung fehlerbehaftet ist. Zu diesem Zweck sieht die in der zitierten Druckschrift beschriebene Ansteuerschaltung bei verschiedenen Fehlertypen (z.B. Kurzschlüsse im Querzweig der Brückenschaltung nach Masse oder zur Versorgungsspannung) Schaltungsvarianten der Transistoren in der Brückenschaltung vor, die trotz des Fehlers ein Laden und Entladen der Kapazität im Zündkreis gewährleisten. Aus der DE 44 47 174 A1 geht nicht hervor, daß die Ansteuerschaltung auf einen Defekt eines der in der Brückenschaltung vorhandenen elektrisch steuerbaren Schalter reagiert, um auch in einem solchen Fehlerfall die Kapazität des Zündkreises aufzuladen bzw. zu entladen.

Der Erfindung liegt daher die Aufgabe zugrunde, eine Ansteuerschaltung der eingangs genannten Art anzugeben, die bei einer möglichst großen Zahl von Fehlerfällen eine Ansteuerung des Zündkreises sicherstellt, insbesondere dann, wenn einer der elektronischen Schalter in der Brückenschaltung defekt ist.

### Vorteile der Erfindung

Die genannte Aufgabe wird mit den Merkmalen des Anspruchs 1 dadurch gelöst, daß bei einem Defekt eines der beiden mit Masse verbundenen Schalter die Aufladung der Kapazität durch Schließen des mit diesem defekten Schalter in Reihe geschalteten, an der Versorgungsspannung liegenden Schalters und Schließen des zu dem anderen Schalterpaar gehörenden, mit Masse verbundenen Schalters erfolgt und daß die Entladung der Kapazität durch Schließen der beiden an der Versorgungsspannung liegenden Schalter erfolgt.

Gemäß den Unteransprüchen kann zusätzlich bei einem Defekt eines der beiden an der Versorgungsspannung liegenden Schalter die Aufladung der Kapazität durch Schließen des mit dem defekten Schalter in Reihe geschalteten, mit Masse verbundenen Schalters und Schließen des zu dem anderen Schalterpaar gehörenden, an der Versorgungsspannung liegenden Schalters erfolgen, und die Entladung der Kapazität kann durch Schließen der beiden an Masse liegenden Schalter erfolgen.

Außerdem kann bei Kurzschluß eines der beiden Anschlüsse des Zündkreises nach Masse die Aufladung der Kapazität durch Schließen desjenigen an der Versorgungsspannung liegenden Schalters erfolgen, der mit dem nicht kurzgeschlossenen Anschluß des Zündkreises verbunden ist. Die Entladung der Kapazität geschieht durch Schließen der beiden an Masse liegenden Schalter.

Zudem kann bei Kurzschluß eines der beiden Anschlüsse des Zündkreises nach der Versorgungsspannung die Aufladung der Kapazität durch Schließen desjenigen an Masse liegenden Schalters vorgenommen werden, der mit dem nicht kurzgeschlossenen Anschluß des Zündkreises verbunden ist. Die Entladung der Kapazität erfolgt durch Schließen der beiden an Masse liegenden Schalter.

Die erfindungsgemäße Schaltung ermöglicht also bei einer sehr großen Zahl von möglicherweise auftretenden Fehlerfällen eine Ansteuerung des Zündkreises, so daß die Rückhaltemittel bei einem Fahrzeugcrash ungehindert ausgelöst werden können.

### Beschreibung eines Ausführungsbeispiels

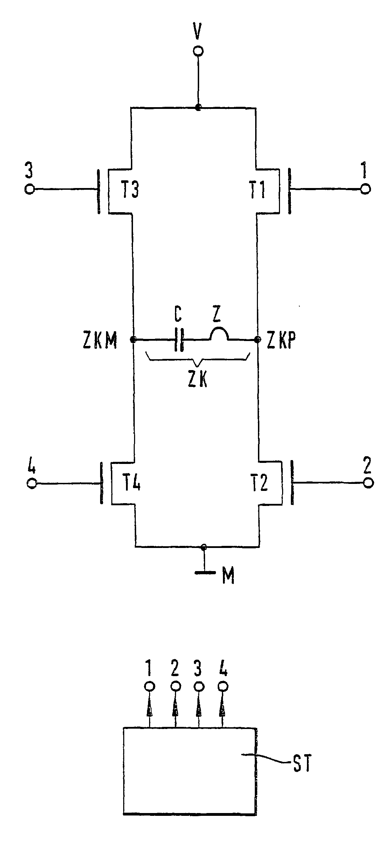

Anhand eines in der Zeichnung dargestellten Ausführungsbeispiels wird nachfolgend die Erfindung näher erläutert.

Die in der Figur dargestellte Ansteuerschaltung für einen Zündkreis ZK besteht aus einer Brückenschaltung mit vier elektronisch steuerbaren Schaltern, vorzugsweise Feldeffekttransistoren T1, T2, T3 und T4. Dabei ist der Transistor T1 mit dem Transistor T2 und der Transistor T3 mit dem Transistor T4 jeweils in Reihe geschaltet. Das in Reihe geschaltete Transistorpaar T1 und T2 ist mit dem in Reihe geschalteten Transistorpaar T3 und T4 parallel geschaltet, wobei an dem Zusammenschaltungspunkt der beiden Transistoren T1 und T3 eine Versorgungsspannung V anliegt und der Zusammenschaltungspunkt der beiden Transistoren T2 und T4 an Masse M liegt. Den Querzweig der Brückenschaltung bildet der Zündkreis, bestehend aus mindestens einem Zündelement Z und einer Kapazität C. Ein Anschlußpunkt ZKM des Zündkreises ZK liegt zwischen den beiden Transistoren T3 und T4 und ein zweiter Anschlußpunkt ZKP des Zündkreises ZK liegt zwischen den beiden Transistoren T1 und T2.

Die Anschlüsse 1, 2, 3 und 4 der Steuerelektroden der einzelnen Transistoren T1, T2, T3 und T4 sind mit einer Steuereinheit ST verbunden. Die Steuereinheit ST steuert die einzelnen Transistoren T1, T2, T3 und T4 der Brückenschaltung so an, daß bei einem Auslösebefehl, den die Steuereinheit von Crashsensoren erhält, die Kapazität C des Zündkreises mehrfach zyklisch auf- und entladen wird. Dieser mehrfache Auf- und Entladevorgang ist deshalb erforderlich, weil die Kapazität C des Zündkreises ZK in der Regel einen sehr kleinen Kapazitätswert aufweist, so daß die bei Maximalspannung in ihr befindliche Ladungsmenge nicht zur Zündung des Zündelements Z ausreicht. Zur Zündung des Zündelements Z bedarf es vielmehr einer höheren Energie, die erst durch mehrfaches Auf- und Entladen der zu dem Zündelement Z in Reihe geschalteten Kapazität in das Zündelement transportiert wird. Ein einmaliger Stromfluß mit der in der Kapazität vorhandenen Ladungsmenge reicht also nicht zur Zündung des Zündelements aus.

Nun soll eine Auslösung des Zündkreises ZK, also ein Auf- bzw. Entladen der Kapazität C auch dann noch möglich sein, wenn in der Brückenschaltung ein Fehler auftritt. Nachfolgend werden acht verschiedene Fehler berücksichtigt und die daraus sich ergebenenden Ansteuerungen der Transistoren T1, T2, T3 und T4 beschrieben. Die Steuereinheit ST führt eine Diagnose der einzelnen Transistoren T1, T2, T3 und T4 durch und überwacht auch den Zündkreis ZK, ob seine Anschlüsse ZKM und ZKP gegen Masse M oder Versorgungsspannung V einen Kurzschluß aufweisen. Die Fehlerdiagnose, die in bekannter Weise auf Widerstandsmessungen beruht, wird hier nicht näher beschrieben, da sie nicht Gegenstand der Erfindung ist.

### 1. Fehlerfall:

Der Anschluß ZKM des Zündkreises ZK bildet einen Kurzschluß nach Masse. In diesem Fall wird zum Aufladen der Kapazität C der Transistor T1 leitend geschaltet, so daß ein Strom von der Versorgungsspannungsquelle V über den Transistor T1 und den Zündkreis ZK nach Masse M am Anschluß ZKM fließen kann. Die Entladung der Kapazität erfolgt dadurch, daß der Transistor T2 leitend geschaltet wird, wodurch neben dem fehlerhaft an Masse M liegenden Anschluß ZKM auch der Anschluß ZKP des Zündkreises ZK über den Transistor T2 an Masse M liegt.

### 2. Fehlerfall:

Der Anschlußpunkt ZKP des Zündkreises ZK bildet einen Kurzschluß nach Masse. Dann wird zur Aufladung der Kapazität C der Transistor T3 leitend geschaltet, so daß von der Versorgungsspannungsquelle V aus ein Strom über den Transitor T3 und den Zündkreis ZK nach Masse M fließen kann. Für die Entladung der Kapazität C wird der Transistor T4 leitend geschaltet, so daß der Ladestrom aus der Kapazität C nach Masse M abfließen kann.

### 3. Fehlerfall:

Der Anschluß ZKM des Zündkreises ZK bildet einen Kurzschluß zur Versorgungsspannung V. In diesem Fall wird zur Aufladung der Kapazität C der Transistor T2 leitend geschaltet, so daß von dem an der Versorgungsspannung V liegenden Anschluß ZKM ein Strom durch den Zündkreis ZK und den Transistor T2 nach Masse M fließt. Zur Entladung der Kapazität C werden die beiden Transistoren T1 und T3 leitend geschaltet.

### 4. Fehlerfall:

Der Anschluß ZKP des Zündkreises ZK bildet einen Kurzschluß zur Versorgungsspannung V. Zur Aufladung der Kapazität C wird der Transistor T4 leitend geschaltet, so daß von dem an der Versorgungsspannung liegenden Anschlußpunkt ZKP ein Strom durch den Zündkreis ZK und den Transistor T4 nach Masse M fließt. Zur Entladung werden wiederum die beiden mit der Versorgungsspannung V verbundenen Transistoren T1 und T3 durchgeschaltet.

### 5. Fehlerfall:

Der Transistor T3 ist defekt, d.h. er kann nicht leitend geschaltet werden. Zur Aufladung der Kapazität C werden die beiden Transistoren T1 und T4 leitend geschaltet, so daß von der Versorgungsspannungsquelle V ein Strom über den Transistor T1, den Zündkreis ZK und den Transistor T4 nach Masse M fließen kann. Zur Entladung der Kapazität C werden die beiden an Masse liegenden Transistoren T2 und T4 leitend geschaltet.

### 6. Fehlerfall:

Der Transistor T1 ist defekt; d.h. er kann nicht leitend geschaltet werden. In diesem Fall werden zur Aufladung der Kapazität C die beiden Transistoren T3 und T2 leitend geschaltet, so daß aus der Versorgungsspannungsquelle V ein Strom über den Transistor T3, den Zündkreis ZK und den Transistor T2 nach Masse M fließen kann. Zur Entladung der Kapazität C werden die beiden mit Masse M verbundenen Transistoren T2 und T4 leitend geschaltet.

### 7. Fehlerfall:

Der Transistor T2 ist defekt, kann also nicht mehr leitend geschaltet werden. Zur Aufladung der Kapazität C werden die Transistoren T1 und T4 leitend geschaltet, so daß aus der Versorgungsspannungsquelle V ein Strom über den Transistor T1, den Zündkreis ZK und den Transistor T4 nach Masse M fließen kann. Entladen wird die Kapazität C dadurch, daß die beiden am Anschluß für die Versorgungsspannungsquelle V miteinander verbundenen Transistoren T1 und T3 leitend geschaltet werden.

### 8. Fehlerfall:

Der Transistor T4 ist defekt. Zur Aufladung der Kapazität C werden die beiden Transistoren T3 und T2 leitend geschaltet, so daß ein Strom von der Versorgungsspannungsquelle V über den Transistor T3, den Zündkreis ZK und den Transistor T2 nach Masse M fließen kann. Zur Entladung der Kapazität C werden wiederum die beiden miteinander verbundenen Transistoren T1 und T3 leitend geschaltet.

## Patentansprüche

1. Ansteuerschaltung für einen Wechselstrom-Zündkreis, der mindestens eine Kapazität (C) und mindestens ein Zündelement (Z), das zur Auslösung eines Rückhaltemittels in einem Fahrzeug dient, enthält, wobei eine Brückenschaltung mit vier elektronisch steuerbaren Schaltern (T1, T2, T3, T4) vorgesehen ist, von denen jeweils zwei Schalter zwischen einer Versorgungsspannung (V) und Masse (M) in Reihe geschaltet sind und der Zündkreis (ZK) einen Brückenquerzweig zwischen den beiden parallel geschalteten Schalterpaaren (T1, T2; T3, T4) bildet, wobei bei einem in der Brückenschaltung auftretenden Fehler eine Ansteuerung derjenigen Schalter (T1, T2, T3, T4) erfolgt, die trotz des Fehlers ein Aufladen und Entladen der Kapazität (C) gewährleisten, **dadurch gekennzeichnet, daß** bei einem Defekt eines der beiden mit Masse (M) verbundenen Schalter (T2, T4) die Aufladung der Kapazität (C) durch Schließen des mit diesem defekten Schalter (T2, T4) in Reihe geschalteten, an der Versorgungsspannung (V) liegenden Schalters (T1, T3) und Schließen des zu dem anderen Schalterpaar gehörenden, mit Masse (M) verbundenen Schalters (T2, T4) erfolgt und daß die Entladung der Kapazität (C) durch Schließen der beiden an der Versorgungsspannung (V) liegenden Schalter (T1, T3) erfolgt .

2. Ansteuerschaltung nach Anspruch 1, **dadurch gekennzeichnet, daß** bei einem Defekt eines der beiden an der Versorgungsspannung liegenden Schalter (T1, T3) die Aufladung der Kapazität durch Schließen des mit dem defekten Schalter in Reihe geschalteten, mit Masse (M) verbundenen Schalters (T2, T4) und Schließen des zu dem anderen Schalterpaar gehörenden, an der Versorgungsspannung (V) liegenden Schalters erfolgt, und daß die Entladung der Kapazität (C) durch Schließen der beiden an Masse (M) liegenden Schalter (T2, T4) erfolgt.

3. Ansteuerschaltung nach Anspruch 1, **dadurch gekennzeichnet, daß** bei Kurzschluß eines der beiden Anschlüsse (ZKM, ZKP) des Zündkreises (ZK) nach Masse (M) die Aufladung der Kapazität (C) durch Schließen desjenigen an der Versorgungsspannung (V) liegenden Schalters (T1, T3) erfolgt, der mit dem nicht kurzgeschlossenen Anschluß (ZKM, ZKP) des Zündkreises (ZK) verbunden ist, und daß die Entladung der Kapazität (C) durch Schließen der beiden an Masse (M) liegenden Schalter (T2, T4) erfolgt.

4. Ansteuerschaltung nach Anspruch 1, **dadurch gekennzeichnet, daß** bei Kurzschluß eines der beiden Anschlüsse (ZKM, ZKP) des Zündkreises (ZK) nach der Versorgungsspannung (V) die Aufladung der Kapazität (C) durch Schließen desjenigen an Masse (M) liegenden Schalters (T2, T4) erfolgt, der mit dem nicht kurzgeschlossenen Anschluß (ZKM, ZKP) des Zündkreises (ZK) verbunden ist, und daß die Entladung der Kapazität (C) durch Schließen der beiden an der Versorgungsspannung (V) liegenden Schalter (T1, T3) erfolgt.

## Claims

1. Actuation circuit for an alternating-current firing circuit which contains at least one capacitor (C) and at least one firing element (Z) which is used to trigger a restraining means in a vehicle, a bridge circuit with four electronically controllable switches (T1, T2, T3, T4) being provided, in each case two of said switches being connected in series between a supply voltage (V) and earth (M), and the firing circuit (ZK) forming a bridge shunt arm between the two pairs of switches (T1, T2; T3, T4) which are connected in parallel, and when a fault occurs in the bridge circuit those switches (T1, T2, T3, T4) which ensure loading and unloading of the capacitor (C) despite the fault being actuated, **characterized in that** when there is a defect in one of the two switches (T2, T4) which are connected to earth (M) the capacitor (C) is charged by closing the switch (T1, T3) which is connected in series with this defective switch (T2, T4) and is connected to the supply voltage (V), and by closing the switch (T2, T4) which is associated with the other pair of switches and is connected to earth (M) , and **in that** the capacitor (C) is discharged by closing the two switches (T1, T3) which are connected to the supply voltage (V).

2. Actuation circuit according to Claim 1, **characterized in that** when there is a defect in one of the two switches (T1, T3) which are connected to the supply voltage the capacitor is charged by closing the switch (T2, T4) which is connected in series with the defective switch and is connected to earth (M), and by closing the switch which is associated with the other pair of switches and is connected to the supply voltage (V), and **in that** the capacitor (C) is discharged by closing the two switches (T2, T4) which are connected to earth (M).

3. Actuation circuit according to Claim 1, **characterized in that**, when one of the two connections (ZKM, ZKP) of the firing circuit (ZK) short-circuits to earth (M), the capacitor (C) is charged by closing that switch (T1, T3) which is connected to the supply voltage (V) and which is connected to the non-short-circuited connection (ZKM, ZKP) of the firing circuit (ZK), and **in that** the capacitor (C) is discharged by closing the two switches (T2, T4) which are connected to earth (M).

4. Actuation circuit according to Claim 1, **characterized in that**, when one of the two connections (ZKM, ZKP) of the firing circuit (ZK) short-circuits to the supply voltage (V), the capacitor (C) is charged by closing that switch (T2, T4) which is connected to earth (M) and is connected to the non-short-circuited connection (ZKM, ZKP) of the firing circuit (ZK), and **in that** the capacitor (C) is discharged by closing the two switches (T1, T3) which are connected to the supply voltage (V).

## Revendications

1. Circuit de commande pour circuit d'allumage à courant alternatif, comprenant au moins un condensateur (C) et au moins un élément d'allumage (Z) servant au déclenchement d'un moyen de retenue sur un véhicule, avec un circuit en pont avec quatre commutateurs à commande électronique (T1, T2, T3, T4) dont deux de ces commutateurs sont montés en série entre une source de courant alternatif (V) et une masse (M), le circuit d'allumage (ZK) formant une dérivation en pont entre les deux paires de commutateurs (T1, T2 ; T3, T4) montées en parallèle, sachant qu'en cas de défaillance sur le circuit en pont, les commutateurs (T1, T2, T3, T4) qui, en dépit d'une telle défaillance, assurent la charge et la décharge du condensateur (C), sont commandés,
**caractérisé en ce qu'**
en cas de défaillance de l'un des deux commutateurs (T2, T4) reliés à la masse (M), la charge du condensateur (C) est réalisée par la fermeture du commutateur (T1, T3) situé du côté de la source de courant alternatif (V) et monté en série avec le commutateur défectueux (T2, T4), et par la fermeture du commutateur (T2, T4) faisant partie de l'autre paire de commutateurs et relié à la masse (M), tandis que la décharge du condensateur (C) est réalisée par la fermeture des deux commutateurs (T1, T3) situés du côté de la source de courant alternatif (V).

2. Circuit de commande selon la revendication 1,
**caractérisé en ce qu'**
en cas de défaillance de l'un des deux commutateurs (T1, T3) situés du côté de la source de courant alternatif, la charge du condensateur est réalisée par la fermeture du commutateur (T2, T4) relié à la masse (M) et monté en série avec le commutateur défectueux, et par la fermeture du commutateur faisant partie de l'autre paire de commutateurs et situé du côté de la source de courant alternatif (V), tandis que la décharge du condensateur (C) est réalisée par la fermeture des deux commutateurs (T2, T4) reliés à la masse (M).

3. Circuit de commande selon la revendication 1,
**caractérisé en ce qu'**
en cas de court-circuit sur l'une des deux connexions (ZKM, ZKP) du circuit d'allumage (ZK) vers la masse (M), la charge du condensateur (C) est réalisée par la fermeture du commutateur (T1, T3) situé du côté de la source de courant alternatif (V) et relié à la connexion (ZKM, ZKP) du circuit d'allumage (ZK) non court-circuitée, tandis que la décharge du condensateur (C) est réalisée par la fermeture des deux commutateurs (T2, T4) situés du côté de la masse (M).

4. Circuit de commande selon la revendication 1,
**caractérisé en ce qu'**
en cas de court-circuit de l'une des deux connexions (ZKM, ZKP) du circuit d'allumage (ZK) vers la source de courant alternatif (V), la recharge du condensateur (C) est réalisée par la fermeture du commutateur (T2, T4) situé du côté de la masse (M) et relié à la connexion (ZKM, ZKP) du circuit d'allumage (ZK) non court-circuitée, tandis que la décharge du condensateur (C) est réalisée par la fermeture des deux commutateurs (T1, T3) situés du côté de la source de courant alternatif (V).
